(19) Europäisches Patentamt
European Patent Office
Office européen des brevets

(11) **EP 4 420 937 B1**

(12) **EUROPEAN PATENT SPECIFICATION**

(45) Date of publication and mention of the grant of the patent:
**26.11.2025 Bulletin 2025/48**

(21) Application number: **23158682.7**

(22) Date of filing: **27.02.2023**

(51) International Patent Classification (IPC):
**B60R 21/013** (2006.01)  **B60R 21/015** (2006.01)
**G06T 7/20** (2017.01)

(52) Cooperative Patent Classification (CPC):
**B60R 21/013; B60R 21/01512; B60R 21/01538; B60R 21/01542; B60R 21/01552; G06T 7/20**

(54) **METHOD FOR DETERMINING OCCUPANT POSITION TO ADAPT A RESTRAINT DEPLOYMENT OF A VEHICLE AND SYSTEM FOR DETERMINING AN OCCUPANT POSITION IN A VEHICLE TO BE USED IN A RESTRAINT DEPLOYMENT ADAPTION IN A VEHICLE**

VERFAHREN ZUR INSASSENPOSITIONSBESTIMMUNG ZUM ANPASSEN EINES RÜCKHALTEEINSATZES EINES FAHRZEUGS UND SYSTEM ZUR INSASSENPOSITIONSBESTIMMUNG

PROCÉDÉ DE DÉTERMINATION DE POSITION D'UN OCCUPANT POUR ADAPTER UN DÉPLOIEMENT DE RETENUE D'UN VÉHICULE ET SYSTÈME DE DÉTERMINATION D'UNE POSITION D'OCCUPANT DANS UN VÉHICULE À UTILISER POUR ADAPTER LE DÉPLOIEMENT D'UN SYSTÈME DE RETENUE DANS UN VÉHICULE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**28.08.2024 Bulletin 2024/35**

(73) Proprietor: **Veoneer Sweden Safety Systems AB 10302 Stockholm (SE)**

(72) Inventors:
• **VERMEULIN, Francois-Xavier**
 **95800 Cergy-Pontoise (FR)**
• **ROCCHISANI, Claire**
 **95800 Cergy-Pontoise (FR)**
• **DEVAVRY, Arnaud**
 **95800 Cergy-Pontoise (FR)**
• **LEMERRER, Yann**
 **95800 Cergy-Pontoise (FR)**
• **BEN SAID, Hela**
 **95800 Cergy-Pontoise (FR)**
• **LOISY, Aurore**
 **95800 Cergy-Pontoise (FR)**

(74) Representative: **Reichert & Lindner Partnerschaft Patentanwälte Prüfeninger Straße 21 93049 Regensburg (DE)**

(56) References cited:
**EP-A2- 1 278 159**      **CN-A- 113 556 975**
**US-A1- 2003 209 893**   **US-A1- 2021 300 274**

**Description**

FIELD OF THE INVENTION

The invention relates to a method for determining at least one position of an occupant in a vehicle to adapt a restraint deployment development of the vehicle.

The invention further relates to a system for determining positions of an occupant in a vehicle to be used in a restraint deployment adaption of a vehicle. The system comprises an electronic control unit being part of the vehicle. The electronic control system encompasses at least a fusion module, an event detection module, an occupant displacement prediction module, and a deployment requests module. At least one 3D sensor system is adapted to capture a plurality of time-delayed image frames of the at least one occupant in the vehicle, and the at least one 3D sensor system is linked to a signal acquisition and processing module of a crash algorithm.

DESCRIPTION OF THE BACKGROUND ART

US 2003/209893 relates to a system for determining positions of an occupant used in a restraint deployment adaption in a vehicle, comprising an electronic control unit of the vehicle; a fusion module, an event detection module, an occupant displacement prediction module, and a deployment requests module being part of the electronic control system; one 3D sensor system adapted to capture a plurality of time-delayed image frames of the at least one occupant in the vehicle, the at least one 3D sensor system being connected to a signal acquisition and processing module of a crash algorithm; wherein a Kalman filter in the signal processing module that determines a filtered head position. US 2004/0153229 A1 relates to sensor system for determining a deployment level of an airbag in a vehicle. A light source of the sensor system emits light onto a region around a vehicle seat. An array of light-sensitive pixels which capture reflected light from the scene, including reflected light that originated from the light source. Processing resources are provided that determine depth information for an object in the scene based on a time-of-flight characteristic of the reflected light from the light source captured on the array. The processing resources may be configured to determine occupancy data for the object based on the captured reflected light from the scene. The processing resources are configured to determine the deployment level of the airbag based at least in part on the occupancy data in when a collision of the vehicle occurs.

US-Patent US 5 653 462 A discloses an occupant position sensor utilizing either ultrasonic, microwave or optical technologies, or seatbelt spool out and seat position sensors, are used as inputs to the primary vehicle crash sensor circuit to permit the longest possible sensing time before the occupant gets proximate to the airbag and is in danger of being injured by the deploying airbag. The sensor further disables the inflatable restraint system if the occupant is in danger of being injured by the system deployment. Separate systems are used for the driver and passenger to permit the optimum decision to be made for each occupant.

US-Patent US 5 531 472 discloses an apparatus for controlling an occupant restraint system in a vehicle. A ROM memory is provided for storing a block of image data representative of a viewing field within the vehicle. The viewing field includes an unoccupied vehicle seat located in the occupant compartment of the vehicle. A new block of image data is obtained which is representative of the viewing field with an occupant on the seat. This image data is obtained with an image sensor, such as a CCD sensor, mounted in the vehicle for viewing the field. The new block of image data is compared with the stored block of image data by a controller to obtain the occupant's size and/or position in the vehicle. The provides a control signal having a value which is a function of the comparison. A restraint regulator, such as a vent valve, responds to the control signal for controlling the occupant restraint system.

Current algorithms make an indirect estimate of the occupant size and occupant position based on the seat track and/or seat weight sensors to classify occupants (small or large). The restraint deployment strategies are calculated and optimized for certain types of occupants in specific positions.

SUMMARY OF THE INVENTION

It is an object of the present invention to provide a method for providing exact data on the size and position of an occupant in a vehicle so that the deployment of the restraint system can be adapted smartly and to prevent the risk of injury to the occupant from the deploying airbag.

The above object is achieved by a method for determining occupant position to be used in a restraint deployment adaption in a vehicle according to the features of claim 1.

It is a further object of the present invention is to provide a system for determining positions of an occupant used in a restraint deployment adaption in a vehicle so that the deployment of the restraint system can be adapted smartly and to prevent the danger of injury to the occupant from the deploying airbag.

The above object is achieved by a system for determining positions of an occupant used in a restraint deployment adaption in a vehicle according to the features of claim 11.

In an embodiment of the method, at least one 3D sensor system is used to capture a plurality of time-delayed image frames of the at least one occupant in the vehicle. A 3D position for each of a plurality of body points is determined from raw image data per captured image frame of the occupant. The 3D positions of the plurality of body points are transmitted to a Kalman filter to determine a filtered head position, a filtered right shoulder position, a filtered left shoulder position, and a filtered middle spine position from the plurality of body points. The filtered head position, the filtered right shoulder position, the filtered left shoulder position and the filtered middle spine position are input to a calculation section which calculates a current 3D head position and a current 3D chest position of the occupant. The current 3D head position and the current 3D chest position are used as an input for the determination of the occupant's position in the vehicle and an adaption of the restraint deployment of the vehicle. The calculation of the current 3D head position and the current 3D chest position is based on 3D image sensing of the position of the occupant and uses 3D body points which are a set of x, y and z point locations on the body surface of the occupant.

The advantage of the present invention is that a determined chest and head position of the occupant, even if points to be measured, regarding the points on the body surface, are occluded manage the time of the deployment of an airbag or even determine whether or not an inhibition of the airbag is needed.

In an embodiment, a signal processing module is applied to calculate a state *st* for each image frame of the plurality of body points of the occupant. Each body point is defined by its position in an x-direction, a y-direction and a z-direction and its corresponding speed in the x-direction, in the y-direction, and in the z-direction.

In addition, the exact chest and head position can be determined even if there is noise or one body point is occluded for a certain time.

To adapt restraint deployment in function of occupant size and position and to ensure the occupant safety in the vehicle, an exact calculation of the size and position of the occupant is required. Here, the occupant position, defined by the exact chest and head position is required.

An enhanced usage of the Kalman filter may comprise various steps to calculate the filtered head position, the filtered right shoulder position, the filtered left shoulder position, and the filtered middle spine position. One step may be predicting a state of a 3D position for each of a plurality of body points of the occupant by taking the previous 3D position for each of a plurality of body points of the occupant and an error estimate. Another step may be a correcting step which compares the predicted position for each of a plurality of body points of the occupant and the measured 3D position for each of a plurality of body points of the occupant. A further step may be an updating step of the 3D position for each of a plurality of body points of the occupant for one image frame with the measured 3D position of a plurality of body points of the occupant. Even when a 3D body point is occluded (for example with a bag, map or the like) it is always possible that the body point position is estimated.

Without using this enhanced way of the Kalman filter, the detection of these body points (left shoulder point, right shoulder point, head point, middle spine point, etc.) could be affected by sensor noise and/or failure. In this case, the visual feature measurements cannot be extracted or provide erroneous values. Raw measurements directly affect the calculation of the occupant position so that optimal airbag deployment is not ensured.

The input data can sometimes be noisy, disturbed and inaccurate, either related to the sensor or related to a specific situation (occlusion or image noise). One possible disturbance of a 3D point occlusion is that a large bag is placed on the occupant's lap and may occlude the chest position. Another possible disturbance of a 3D point occlusion is that the passenger or occupant reads a magazine or a book that may occlude the head position. Further, a passenger or occupant takes a large sheet map that may cover or occlude the chest and the head position.

A 3D sensor failure may be caused when the occupant smokes and due to cigarette or vape smoke, the 3D sensor system or 3D sensor could not extract the correct 3D body points. Another 3D sensor failure is caused by light interference with the camera, phone light, reflection from a watch or glasses. A sudden change in light from very dark to bright, which occurs, for example, when the vehicle is driving through a tunnel.

These multiple situations can directly impact the occupant safety when airbag deployment is based on the occupant position calculated from the 3D key body points that might be erroneously detected.

To overcome this sensor and/or body point extraction problem, the Kalman filter is used, which can remove sensor noise and predict data when the measurements are occluded, as described above.

In an embodiment, the Kalman filter is used not only for filtering but also for predicting body points when any of the body points cannot be extracted by the sensor due to a sensor failure or due to a certain situation obscuring the body point. The predicting step of the Kalman filter may predict the state according to the system model for the next iteration. The filter uses the dynamics of each 3D body point, which defines its evolution over time, to obtain better data and thus eliminate the effect of noise.

In an embodiment, the enhanced method of the Kalman filter includes, before the correction step, an eligibility test to determine whether the measured 3D position and the model are valid. The eligibility test can be based on the Mahalanobis distance based on measurement error estimation or other measure quality estimations. A measurement error may be the difference the between the raw image data and the predicted 3D positions of the body points. The threshold chosen can ensure that the observations and/or measurements and the prediction are within an acceptance range. Given the Gaussian properties, this acceptance range may be an ellipsoid with center $\hat{z}$ and matrix $S$. This threshold may also discriminate or eliminate the measurement jumps related to voluntary or involuntary dynamic movements of the occupant.

Once the key body points are filtered, the head position corresponds to the filtered head point or is predicted if the head point was occluded. A coherence check may be carried out, using the filtered head position, the filtered right shoulder position, and the filtered middle spine position. This is a check to determine whether or not the position of one 3D point in relation to other body points respects the morphology of the person. This is to check, for example, the width between the body point of the left shoulder and the body point of the right shoulder, or the distance between the head between the body point of the left shoulder and the body point of the right shoulder. The coherence check is carried out on the filtered head position, the filtered right shoulder position, the filtered left shoulder position, and the filtered middle spine position to determine the 3D head position. A result of the coherence check may be sent to a point combination to determine the 3D chest position.

This coherence check could be also used to determine whether or not the occupant is in an out-of-range position in the seat. For example, if the driver turns backwards to see the rear seats while driving with this coherence check, a warning could be added to alert the driver that he is in an out-of-range position.

In an embodiment, a non-transitory computer-readable medium stores program instructions executable on an electronic control unit of a vehicle to perform a computer-implemented method for determining a 3D head position and a 3D chest position of an occupant in a vehicle. The outputs of the 3D head position and the 3D chest position may be used as inputs of a function that defines the occupant position in a vehicle to adapt a restraint deployment development of a vehicle.

The occupant position could not solely rely on the position of the seat, in real life the occupant could have different positions on the seat. For this reason, it is important for restraint deployment to have an accurate determination of the occupant's 3D chest position and 3D head position from the dashboard. These distances could control the time of the deployment or even determine whether or not an inhibition of the airbag is required.

The safety devices are airbags, adaptive airbags, seat belts, belt tensioners, seat belt pretension or the like. The 3D sensor system comprises at least one 3D imaging sensor. The 3D sensor system can be configured as well as an interior time-of-flight camera, a 3D camera system, or an interior radar system, or any combination of the latter.

An embodiment of the system for determining positions of an occupant used in a restraint deployment adaption in a vehicle comprises an electronic control unit of the vehicle. A fusion module, an event detection module, an occupant displacement prediction module, and a deployment requests module are part of the electronic control system. At least one 3D sensor system is adapted to capture a plurality of time-delayed image frames of the at least one occupant in the vehicle, the at least one 3D sensor system being connected to a signal acquisition and processing module of a crash algorithm. A Kalman filter is implemented in the signal processing module and determines a filtered head position, a filtered right shoulder position, a filtered left shoulder position and a filtered middle spine position from a plurality of body points captured by the at least one 3D sensor system. A calculation section is provided which calculates a current 3D head position and a current 3D chest position from the filtered head position, the filtered right shoulder position, the filtered left shoulder position, and the filtered middle spine position. The current 3D head position and the current 3D chest position are used in the crash algorithm.

## Definitions:

### Kalman Filter

A Kalman filter can be applied wherever one has an uncertain information about a dynamic system (occupant in a vehicle) and one can make an educated guess as to what the system will do next. Even if a chaotic reality shows up and interferes with the clean motion one guessed about, the Kalman filter will often do a very good job of figuring out what actually happened, and it can take advantage of correlations between absurd phenomena that one might not have thought to exploit.

Kalman filters are ideal for systems which are continuously changing. They have the advantage of being small in memory (since they do not need to keep any history other than the previous state), and they are very fast, making them well-suited for real-time problems and embedded systems.

### Mahalanobis Distance

The Mahalanobis distance is an effective multivariate distance metric that measures the distance between a point and a distribution. It is an extremely useful metric with excellent applications in multivariate anomaly detection, classification on highly imbalanced datasets, and one-class classification. A combination of the Mahalanobis distance with independent quality measure estimation is used to see if the measurement is valid or not. This combination is different from a standard Kalman filter implementation.

BRIEF DESCRIPTION OF THE DRAWINGS

The numerous advantages of the disclosure may be better understood by those skilled in the art by reference to the accompanying figures in which:

**Figure 1** is a schematic view illustrating a vehicle including an ECU for controlling various protection devices.

**Figure 2** is a schematic representation of a 3D sensor system for determining the current position of an occupant in a vehicle.

**Figures 3A to 3C** are different schematic views showing the relationship between the head or chest distance from the steering wheel or the dashboard.

**Figure 4** is a schematic representation of a plurality of 3D body points on an occupant's body, which are used for the calculation or determination of the current head position and chest position of the occupant.

**Figure 5** is a schematic representation of the steps for determining the 3D head and chest position of the occupant in the vehicle.

**Figure 6** is a schematic view of the filter steps used in the Kalman filter to determine the 3D head and the chest position of the occupant in the vehicle.

**Figure 7** is a schematic view of an embodiment of the crash algorithm using the occupant size, the occupant chest distance and the occupant head distance to the steering wheel and/or dashboard.

DETAILED DESCRIPTION

In the ensuing description, numerous specific details are provided to enable maximum understanding of the embodiments that are provided by way of example. The embodiments may be implemented with or without specific details, or else with other methods, components, materials, etc. In other circumstances, well-known structures, materials, or operations are not illustrated or described in detail so that various aspects of the embodiments will not be obscured. Reference in the course of the present description to "an embodiment" or "one embodiment" means that a particular structure, peculiarity, or characteristic described in connection with its implementation is comprised in at least one embodiment. Hence, phrases such as "in an embodiment" or "in one embodiment" that may recur in various points of the present description do not necessarily refer to one and the same embodiment. Furthermore, the particular structures, peculiarities, or characteristics may be combined in any convenient way in one or more embodiments.
Same reference numerals refer to same elements or elements of similar function throughout the various figures. Furthermore, only reference numerals necessary for the description of the respective figure are shown in the figures. The shown embodiments represent only examples of how the invention can be carried out. This should not be construed as limiting the invention.

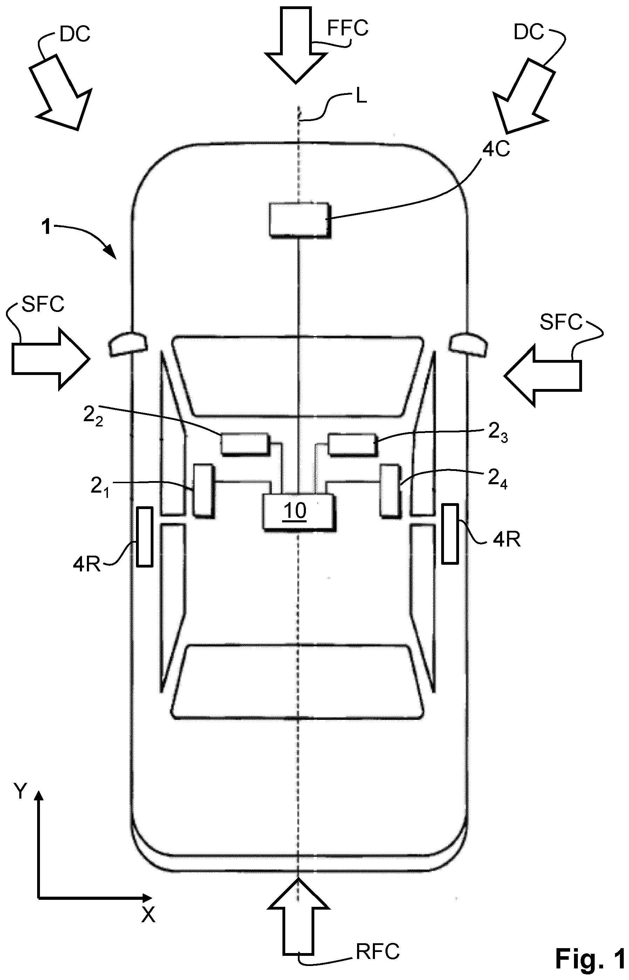

**Figure 1** is a schematic view illustrating a vehicle 1 with an electronic control unit 10 (ECU) for controlling various protection devices $2_1, 2_2, ... 2_N$ for occupants (not shown) in vehicle 1. Hereinafter, "left" and "right" of vehicle 1 mean "left" and "right" of the center line L in the center in the width direction of vehicle 1.
Preferably, ECU 10 is arranged centrally in vehicle 1 so as to prevent a damage to ECU 10 in the event of a possible crash. ECU 10 is communicatively connected to at least one central impact sensor 4C, which detects an impact, and at least one remote impact sensor 4R. Additionally, the at least one central impact sensor 4C and the at least one remote impact sensor 4R are preferably distributed such that it is possible to detect the location of the impact. The at least one central impact sensor 4C and the at least one remote impact sensor 4R are preferably high sensors (acceleration sensors). In the embodiment shown herein, ECU 10 is electrically connected to a left side protection device $2_1$, a left front protection device $2_2$, a right front protection device $2_3$ and a right side protection device $2_4$. Although not shown, additional protection devices $2_i$, 5 <= i <= N can be provided for rear seats (not shown).
The left front protection device $2_2$ and the right front protection device $2_3$ may be airbags (for example, face airbags and other airbags), seat belts, seat belt pretensioners, etc., which are deployed during a frontal face collision FFC to protect an occupant in the driver seat and passenger seat. The left side protection device $2_1$ and the right side protection device $2_4$ may be airbags, seat belts, seat belt pretensioners, etc., which are deployed during an offset collision (not shown), a diagonal collision DC, and a side face collision SFC to protect occupants in the driver seat and passenger seat.

ECU 10 controls the activity of the various protection devices $2_1$, $2_2$,..., $2_N$. It is obvious to a person skilled in the art that protection devices $2_1$, $2_2$, ...$2_N$ are also used to protect the occupants in vehicle 1 in the event of a rear face collision RFC. A coordinate system is assigned to vehicle 1. X-coordinate x is oriented along the width of vehicle 1 and Y-coordinate y is oriented along the length of vehicle 1.

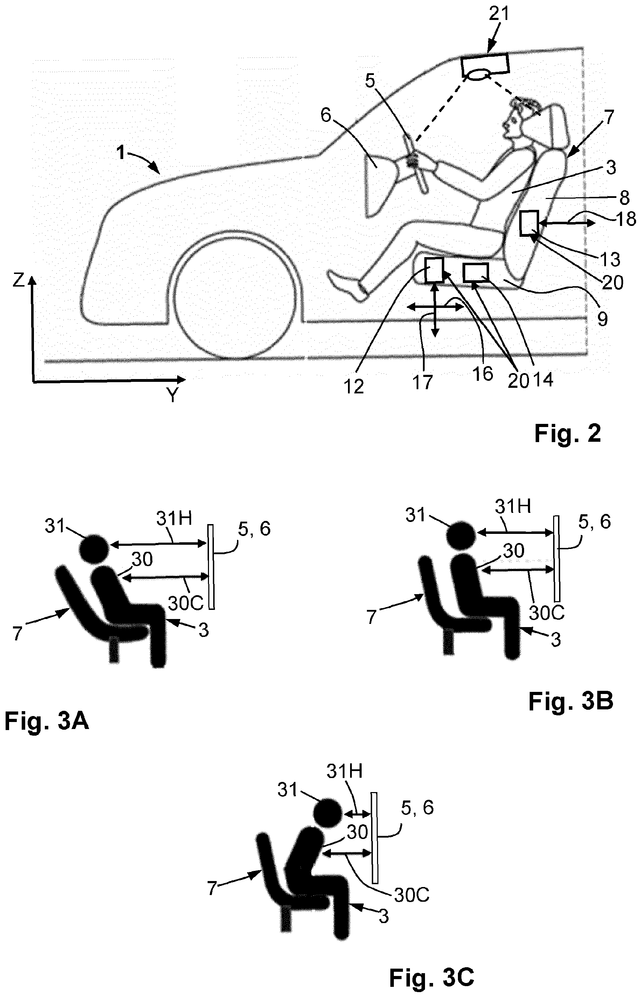

**Figure 2** shows a schematic representation of a 3D sensor system 21 for determining the current position of an occupant 3 in a vehicle 1. The schematic representation shown here describes the situation in which the position of occupant 3, who is the driver of vehicle 1, is determined by at least one sensor 3D sensor system 21. It is obvious to a person skilled in the art that the present invention is not limited to determining only the position of the driver of vehicle 1. The present invention enables the position determination of all occupants 3 in a vehicle 1, and the information data obtained therefrom is used in the method for a restraint deployment strategy.

As mentioned above, the current position or size of the occupant 3 (for example driver) may be determined using at least one 3D sensor system 21. The at least one sensor 3D sensor system 21 determines the current position of occupant 3 (or occupants 3) by direct sensing. The 3D sensor system 21 may measure the depth (or distance or range) to an object based on illuminating the object with a laser (or other types of light source) and measuring the backscattered light.

According to one embodiment, the 3D sensor system 21 is defined as projected-light sensors which combine the projection of a light pattern with a standard 2D camera, and depth is measured via triangulation. According to a further embodiment, the 3D sensor system 21 comprises time-of-flight sensors that measure depth by estimating the time delay between light emission and light detection.

Direct sensing of the current position of occupant 3 by the 3D sensor system 21 may be based on the use of an interior time-of-flight camera, a 3D imaging sensor, or an interior radar system.

In an embodiment, a seat sensor system 20 for at least one seat 7 of vehicle 1 comprises a plurality of sensors, which are at least one seat track sensor 12, at least one back rest sensor 13 and at least one weight sensor 14. The at least one seat track sensor 12 is assigned to a seating 9 of seat 7 and is configured to detect forward/rearward states 16 of seating 9 (seat 7) and/or to detect upward/downward states 17 of seating 9 (seat). At least one back rest sensor 13 is assigned to the back rest 8 of seat 7. It is obvious to a person skilled in the art that each seat 7 of vehicle 1 has at least one back rest sensor 13. The at least one back rest sensor 13 determines forward/rearward states 18 of the back rest 8 of the seat 7.

In addition, at least one weight sensor 14 is assigned to the seating 9 of seat 7. The at least one weight sensor 14 is configured to determine the weight of occupant 3 in the respective seat 7.

The Y-coordinate y is oriented along the length of vehicle 1, and the Z-coordinate is oriented along the height of vehicle 1.

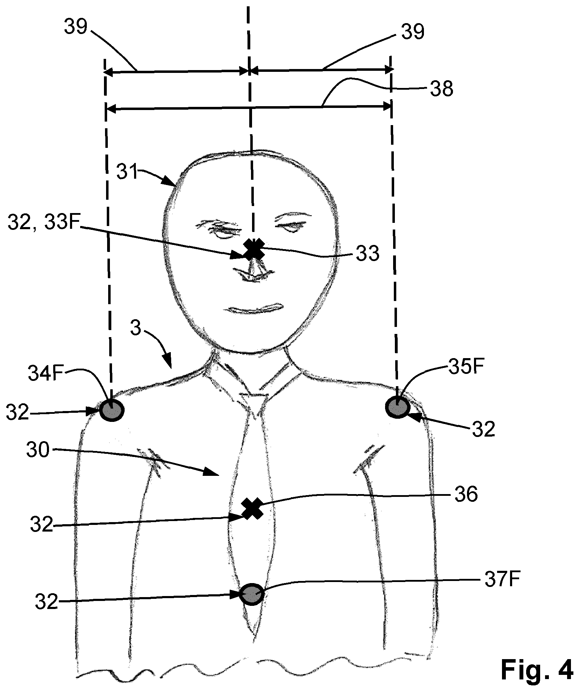

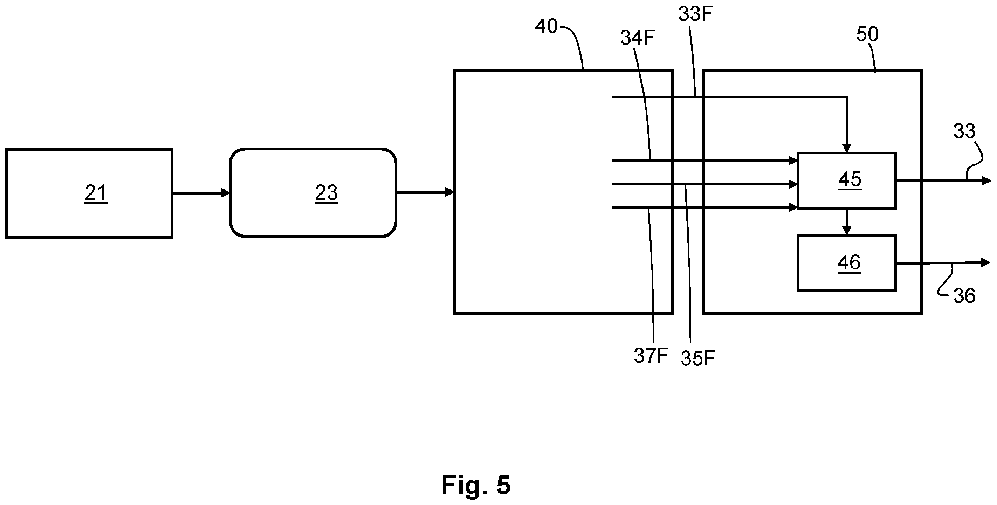

**Figures 3A to 3C** show different schematic views, illustrating the relationship between a distance 30C of a chest 30 and a distance 31H of a head 31 of the occupant 3 from the steering wheel 5 or the dashboard 6 and the seat track (not shown) determined by the seat track sensor 12 (see Fig. 2) and/or the back rest sensor 13 (see Fig. 2). The distance 30C of chest 30 and the distance 31H of head 31 provide a high added value in case of braking situations or abrupt deceleration of vehicle 1 (see Fig. 2), where occupant 3 leans forward, while the seat track sensors 12 and/or the back rest sensors 13 do not detect this. The distance 30C of the occupant's 3 chest 30 and/or the distance 31H of the occupant's 3 head 31, sitting in the seat 7, are determined with the at least one 3D sensor system 21 (see Fig. 2). The 3D sensor system 21 is used to determine a current 3D head position 33 (see Fig. 4) and a current 3D chest position 36 (see Fig. 4) from a plurality of body points 32 (see Fig. 4) using a Kalman filter 40 (see Fig. 5).

**Figure 4** is a schematic representation of a plurality of 3D body points 32 on the occupant's 3 body that are used for the calculation or determination of a current head position 33 and a current chest position 36. In order to obtain an adequate fit (adaption) of the restraint deployment, the input data for the calculation or determination are the occupant 3 size and the occupant 3 position. As shown in Fig. 4, the focus is on the exact calculation of the occupant 3 position, which is defined by the current head position 33 and the current chest position 36. The calculated current head position 33 and the calculated current chest position 36 ensure occupant safety in the vehicle 1 and are part of the adequate fit or adjustment of the restraint deployment. For the head position 33, it's computed through the images and filtered or predicted 3D body point 32 positions (even if one or more body points 32 are occluded) by a Kalman filter. The chest position 36 is computed using the combination of the 3D body points 32 filtered or predicted (filtered or predicted right shoulder position 34F, filtered or predicted left shoulder position 35F and filtered or predicted middle spine position 37F).

The calculation of the head position 33 and the chest position 36 is based on the 3D sensor system 21 (3D imaging device), which detects body points 32 on the occupant's 3 body surface. Each body point 32 is defined in 3D space by an X-coordinate x, a Y-coordinate y and a Z-coordinate z. The body points 32 of occupant 3 may be, for example, the head 31, the left and right shoulders, the middle spine, the hips, or the like. It should be noted for a person skilled in the art that the body points 32 shown in Fig. 4 are for descriptive purposes and should not be construed as limiting the invention. The position of the body points 32 in space is calculated frame by frame by a 3D image sensor of the 3D sensor system 21 using an image processing algorithm. These body points 32 points are used to calculate two robust pieces of information, namely the head position 33 and the chest position 36, both of which are defined by an X-coordinate x, a Y-coordinate y and a Z-coordinate z.

**Figure 5** is a schematic representation of the steps for determining the 3D head position 33 and the 3D chest position 36 of occupant 3 in vehicle 1. Using the 3D sensor system 21, a 3D position (X-coordinate x, Y-coordinate y, and Z-coordinate z) of each body point 32 and a velocity of each body point 32 (in the X-coordinate x, the Y-coordinate y and the Z-coordinate z) are determined. Consequently, the state *st* of each body point 32 is defined as a 6-dimensional vector (see *st* below).

$$st = \begin{pmatrix} x \\ y \\ z \\ \dot{x} \\ \dot{y} \\ \dot{z} \end{pmatrix}$$

The 3D head position 33 and the 3D chest position 36 are obtained after some preprocessing steps. Once the body points 32 are filtered, the head position 33 corresponds to the filtered or predicted head position 33F if the head point 33 was occluded. In a calculation section 50, a coherence check 45 is performed using the filtered head position 33F, the filtered right shoulder position 34F, the filtered left shoulder position 35F, and the filtered middle spine position 37F. The results of the coherence check 45 are transmitted to a point combination 46 to check whether the position of, for example, the 3D head point 33 is in relation to other body points 32 and takes into account the morphology of occupant 3. The output of the point combination 46 is the 3D chest position. For example, the width 38 between the body points 32 of the shoulders or the distance 39 between the head 31 and the body points 32 of shoulders is checked.

This coherence check could also be used to determine whether occupant 3 is in an out-of-range position on seat 7 (see Fig. 2) or not. For example, if occupant 3 (driver) turns backward to look towards or see the rear seats while driving, this check could be used to add a warning to alert that occupant 3 (driver) is in an out-of-range position.

After the coherence check of body points 32, the chest position 36 is determined. It corresponds to a calculation using a combination of the filtered right shoulder position 34F, the filtered left shoulder position 35F and the filtered middle spine position 37F.

$$Chest = \alpha \times ShouldLeft_{Filtered} + \beta \times ShouldRight_{Filtered} + \gamma \times SpinMid_{Filtered}$$

with: $\alpha + \beta + \gamma = 1$

The choice of the parameters $\alpha$, $\beta$ and $\gamma$ is based on the occlusion state of the filtered right shoulder position 34F, the filtered left shoulder position 35F, and the filtered middle spine position 37F. In the ideal situation, when the filtered right shoulder position 34F, the filtered left shoulder position 35F, and the filtered middle spine position 37F are visible, the parameters are:

$$\alpha = \beta = \gamma = \frac{1}{3}$$

If any of the filtered right shoulder position 34F, the filtered left shoulder position 35F, and the filtered middle spine position 37F is occluded, for example, when a bag is placed on the occupant's lap to search for something, it may occlude the filtered middle spine position 37F for a certain period of time. As a result, $\gamma$ is chosen to be smaller than the other parameters to give more importance to other visible data, thus:

$$\alpha = \beta > \gamma$$

To create a filter model, an equation of state and a measurement equation are required:
Equation of state:

$$st^P = Ast + Bu + v$$

where $A \in R^{6 \times 6}$ $B \in R^{3 \times 6}$, and *v* is the noise.

The measurement depends on the state *st,* with some noise w, so the measurement equation is:

$$z = Hst + w$$

where $z = \begin{pmatrix} x \\ y \\ z \end{pmatrix}$ is the measurement of the 3D body position 32.

The new position can be calculated by the acceleration, speed and the last calculated position. The example shown here uses a 2D point (x and y) to show and simplify the calculation of the new body point. It is understood that the limitation to one 2D point is for descriptive purposes only and should not be construed as limiting the invention.

$$x_{new}(t) = x + \dot{x}(t) + \ddot{x}\frac{t^2}{2}$$

$$y_{new}(t) = y + \dot{y}(t) + \ddot{y}\frac{t^2}{2}$$

$$\dot{x}_{new}(t) = \dot{x} + \ddot{x}(t)$$

$$\dot{y}_{new}(t) = \dot{y} + \ddot{y}(t)$$

The equation of state $st$ and $A$ and $B$ reads as follows:

$$xt^P = Ast + Bu + v$$

$$st^P = \begin{pmatrix} 1 & 0 & t & 0 \\ 0 & 1 & 0 & t \\ 0 & 0 & 1 & 0 \\ 0 & 0 & 0 & 1 \end{pmatrix} st + \begin{pmatrix} \frac{t^2}{2} & 0 \\ 0 & \frac{t^2}{2} \\ t & 0 \\ 0 & u \end{pmatrix} u + v$$

The measurement equation is:

$$z = Hx + w$$

which results in:

$$\begin{pmatrix} x \\ y \end{pmatrix} = H \begin{pmatrix} x \\ y \\ \dot{x} \\ \dot{y} \end{pmatrix} + w$$

where $H$ is the matrix relating the measurement to the state $st$.

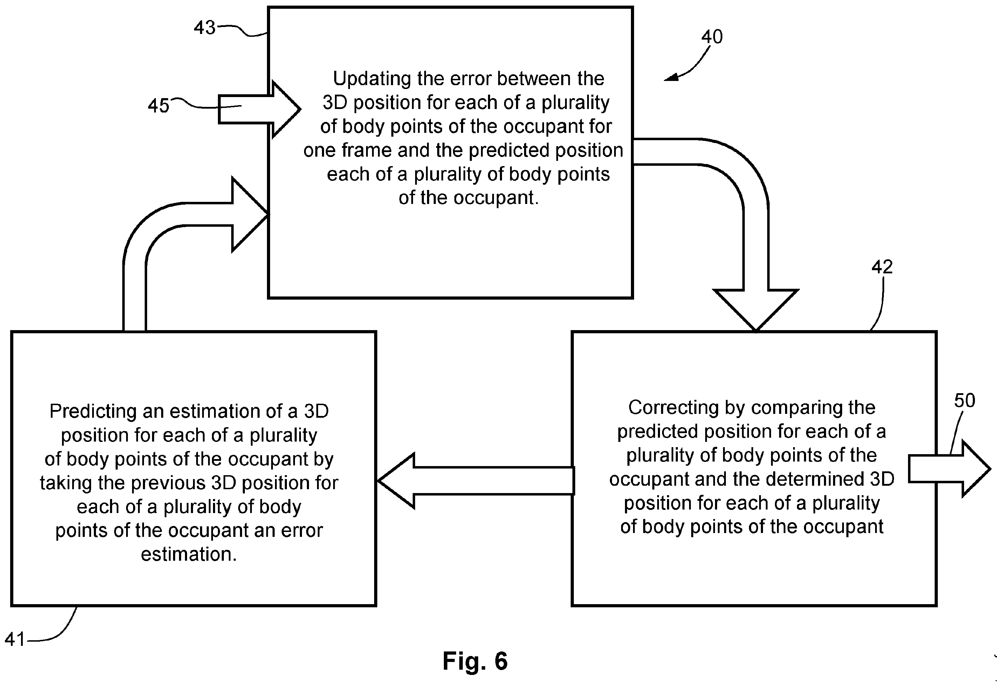

**Figure** 6 is a schematic view of the filter steps used in the Kalman filter to determine the current 3D head position 33 and the current 3D chest position 36 of occupant 3 in vehicle 1.

One filter step is a predicting step 41 for predicting an estimate according to the system model. To do this, the Kalman filter 40 takes the previous parameter and error estimate and predicts the new parameters and error based on the system modeling.

A correction step 42 is carried out by comparing the predicted parameter to the measurements (3D position for each of a plurality of body points 32) by comparing the predicted position for each of a plurality of body points 31 of the occupant 3 and the determined 3D position for each of a plurality of body points 32 of the occupant 3.

An updating step 43 updates the predicted parameters with new measurements 45 of the 3D position for each of a plurality of body points 32.

Prior to the correction step 42, an eligibility test takes place to determine if the 3D position measurement (observation) and the system model are valid. The eligibility test is defined as follows:

$$Inno^T \times S^{-1} \times Inno \leq threshold$$

with

- 

$$Inno = z - \hat{z},$$

which is the 3D position measurement error between the raw image data 23 and the predicted observation in the Kalman filter 40. It is called innovation.

- $S$ is the covariance of the observation error.

- 

$$Inno^T \times S^{-1} \times Inno$$

is the Mahalanobis distance.

The calculated distance is a Mahalanobis distance. The chosen threshold can ensure that the observations and the prediction are within an acceptance range. Considering Gaussian properties, this acceptance range could be an ellipsoid with center $\hat{z}$ and matrix $S$. This threshold can also be used to distinguish or eliminate the measurement jumps due to voluntary or involuntary dynamic movements of occupant 3.

This step of eligibility test with the reliability check uses thresholds that allow the detection of errors (failures):

- If a sensor failure is detected, the step of correction 42 is performed and it is relied only on the model (update step 43 that uses only the model) only, and

- if the measurement is valid, a gain of correction is calculated, and the state prediction is estimated using this gain.

Head and Chest Calculation

Once the key body points 32 of the occupant's 3 body are filtered, the head position 33 corresponds to the head point filtered or predicted if the point was occluded. A coherence check 45 is performed using the head position 33, the shoulders and the middle spine filtered. It checks whether or not the position of one 3D point in relation to other 3D points respects the morphology of the occupant 3. For example, the shoulders width or the distance between the head and the shoulders is checked.

This coherence check could also be used to determine whether or not occupant 3 is in an out-of-range position in seat 7. For example, if the driver turns backward to see the rear seats while driving, this check could be used to add a warning to alert the driver that he is in an out-of-range position.

After the point coherence check 45, the chest position 36 is determined. It corresponds to a calculation using a combination of the filtered 3D body points of the shoulders and middle spine (Fig. 1).

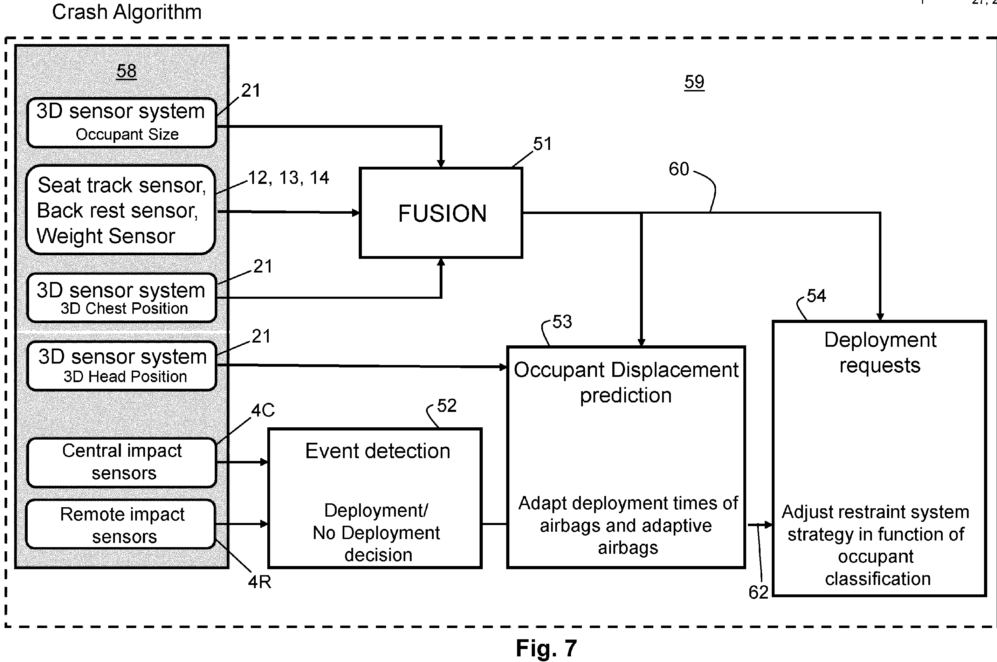

**Figure 7** is a schematic view of an embodiment showing the use 3D head position 33 and the 3D chest position 36 of occupant 3 by a crash algorithm 59.

The current distance 31H of the head 31 of the distance 30C of the chest 30 of occupant 3 and other body points 32 of occupant 3 from steering wheel 5 of dashboard 3 is measured by the at least one 3D sensor system 21, which is connected to a signal acquisition and processing module 58. The 3D head position 33 and the 3D chest position 36 are used in an occupant displacement prediction module 53. The occupant displacement prediction module 53 is used to optimize the requested restraint protections based on the position of occupant 3 to ensure better coupling between the airbag or other restraint elements and occupant 3. The determined current 3D head position 33 and the determined current 3D chest position 36 of occupant 3 from the steering wheel 5 or the dashboard 6 determine the timing and efficiency of an airbag protection, which are highly dependent on its deployment time and its interaction with the head 31 or the chest 30 of occupant 3. The 3D head position 33 and the 3D chest position 36 are calculated in the signal acquisition and processing module 58 of the crash algorithm 59.

Prior to using the determined current 3D chest position 36 in the occupant displacement prediction module 53, the determined current 3D chest position 36 is sent to a fusion module 51 of the crash algorithm 59. The fusion module 51 also uses information or data from the conventional seat sensor system 20 (seat track sensor 12, back rest sensor 13, and weight sensor 14). As mentioned in the description of Fig. 2, seat track sensor 12 provides information about at least the forward/rearward states 16 of seating 9. Seat track sensor 12 can also provide upward/downward states 17 of seating 9. Back rest sensor 13 provides information about the position of the back rest 8 of seat 7. The 3D chest position 36 adds more granularities to the position of occupant 3 in seat 7. The fused occupant's 3D chest position 36, which is represented in the fused occupant classification 60, the 3D head position 33, and the results of the event detection module 52 are transmitted to the occupant displacement prediction module 53, which adjusts the deployment times of airbags and adaptive airbags, allowing a tailored deployment of the restraints according to the detection of a crash.

The fused occupant classification 60 and a result 62 from the occupant displacement prediction module 53 are fed to the deployment requests module 54, allowing an adjustment of the restraint system strategy in function of the occupant classification.

It is believed that the present disclosure and many of its attendant advantages will be understood by the foregoing description, and it will be apparent that various changes may be made in the form, construction, number and arrangement of the components without departing from the disclosed subject matter or without sacrificing all of its material advantages. The form described is merely explanatory, and it is the intention of the following claims to encompass and include such changes. Accordingly, the scope of the invention should be limited only by the claims appended hereto.

LIST OF REFERENCE NUMERALS

| | |
|---|---|
| 1 | Vehicle |
| $2_1, 2_2, ...2_N$ | Protection devices |
| 3 | Occupant |
| 4C | Central impact sensor |
| 4R | Remote impact sensor |
| 5 | Steering wheel |
| 6 | Dashboard |
| 7 | Seat |
| 8 | Back rest |
| 9 | Seating |
| 10 | Electronic control unit (ECU) |
| 12 | Seat track sensor |
| 13 | Back rest sensor |
| 14 | Weight sensor |
| 16 | Forward/rearward state |
| 17 | Upward/downward state |
| 18 | Forward/rearward state |
| 20 | Seat sensor system |
| 21 | 3D sensor system |
| 23 | Raw image data |
| 30 | Chest |
| 30C | Distance of chest |
| 31 | Head |
| 31H | Distance of head |
| 32 | Body point |
| 33 | Head position |
| 33F | Filtered head point |
| 34F | Filtered right shoulder position |
| 35F | Filtered left shoulder position |
| 36 | Chest position |
| 37F | Filtered middle spine position |
| 38 | Width |
| 39 | Distance |
| 40 | Kalman filter |

| 41 | Predicting |
|---|---|
| 42 | Correcting |
| 43 | Updating |
| 45 | Coherence check |
| 46 | Point combination |
| 50 | Calculation section |
| 51 | Fusion module |
| 52 | Event detection module |
| 53 | Occupant displacement prediction module |
| 54 | Deployment requests module |
| 58 | Signal acquisition and processing module |
| 59 | Crash algorithm |
| 60 | Fused occupant classification |
| 62 | Result |
| L | Center line |
| *st* | State |
| x | X-coordinate, x-direction |
| y | Y-coordinate, y-direction |
| z | Z-coordinate, z-direction |

**Claims**

1. A method for determining positions of an occupant (3) in a vehicle (1) to adapt a restraint deployment of the vehicle (1), the method comprising:

   providing at least one 3D sensor system (21) for capturing a plurality of time-delayed image frames of the at least one occupant (3) in the vehicle (1);

   determining a 3D position for each of a plurality of body points (32) of the occupant (21) from raw image data (23) per captured image frame;

   transmitting the 3D positions of the plurality of body points (32) to a Kalman filter (40) to determine a filtered or predicted head position (33F), a filtered or predicted right shoulder position (34F), a filtered or predicted left shoulder position (35F), and a filtered or predicted middle spine position (37F) from the plurality of body points (32);

   inputting the filtered or predicted head position (33F), the filtered or predicted right shoulder position (34F), the filtered or predicted left shoulder position (35F), and the filtered or predicted middle spine position (37F) to a calculation section (50) which calculates a current 3D head position (33) and a current 3D chest position (36); and

   using the current 3D head position (33) and the current 3D chest position (36) as an input for determining the position of the occupant (3) in the vehicle (1) and an adaption of the restraint deployment of the vehicle (1).

2. The method according to claim 1, wherein a signal processing module (58) is applied to calculate a state ($st$) for each image frame of the plurality of body points (32) of the occupant (3), wherein each body point (32) is defined by its position in an x-direction (X), a y-direction (Y) and a z-direction (Z) and its corresponding speed ($\dot{x}$) in the x-direction (X), ($\dot{y}$) in the y-direction (Y) and ($\dot{z}$) in the z-direction (Z).

3. The method according to any of the preceding claims, wherein the Kalman filter (40) comprises the steps of:

   • predicting (41) a state ($st$) of a 3D position for each of a plurality of body points (32) of the occupant (3) by taking the previous 3D position for each of a plurality of body points (32) of the occupant and an error estimate;

   • correcting (42) by comparing the predicted position for each of a plurality of body points (32) of the occupant (3) and the measured 3D position for each of a plurality of body points (32) of the occupant (3); and

   • updating (43) the 3D position for each of a plurality of body points (32) of the occupant (3) for one image frame with the measured 3D position of a plurality of body points (32) of the occupant (3).

4. The method according to claim 3, wherein the predicting (41) predicts the state state ($st$) according to the system model for the next iteration.

5. The method according to claim 3, wherein prior to the correcting (42), an eligibility test is carried out to determine whether or not the measured 3D position and the model are valid, wherein the eligibility test is based on the Mahalanobis distance:

$$Inno^T \times S^{-1} \times Inno \leq threshold.$$

6. The method according to claim 5, wherein *Inno* = z - *ẑ* which is a measurement error between the raw image data (23) and the predicted 3D positions of the body points (32).

7. The method according to claim 5, wherein the eligibility test combines the Mahalanobis distance with an estimation of the measurement quality.

8. The method according to claim 1, wherein a coherence check (45) is carried out on the filtered head position (33F), the filtered right shoulder position (34F), the filtered left shoulder position (35F), and the filtered middle spine position (37F) to determine the 3D head position (33).

9. The method according to claim 8, wherein a result of the coherence check (45) is sent to a point combination (46) to determine the 3D chest position (36).

10. A non-transitory computer-readable medium storing program instructions executable on an electronic control unit (10) of the system of claim 11 to perform a computer-implemented method of claim 1 for determining a 3D head position (33) and a 3D chest position (36) of an occupant (3) in a vehicle according to the preceding claims.

11. A system for determining positions of an occupant (3) used in a restraint deployment adaption in a vehicle (1), comprising:

  an electronic control unit (10) of the vehicle (1);
  a fusion module (51), an event detection module (52), an occupant displacement prediction module (53), and a deployment requests module (54) being part of the electronic control system (10);
  at least one 3D sensor system (21) adapted to capture a plurality of time-delayed image frames of the at least one occupant (3) in the vehicle (1), the at least one 3D sensor system (21) being connected to a signal acquisition and processing module (58) of a crash algorithm (59);
  **characterized by**
  a Kalman filter (40) in the signal processing module (58) that determines a filtered head position (33F), a filtered right shoulder position (34F), a filtered left shoulder position (35F), and a filtered middle spine position (37F) from a plurality of body points (32) captured by the at least one 3D sensor system (21); and
  a calculation section (50) that calculates a current 3D head position (33) and a current 3D chest position (36) from the filtered head position (33F), the filtered right shoulder position (34F), the filtered left shoulder position (35F), and the filtered middle spine position (37F) for use in the crash algorithm (59).

12. The system according to claim 11, wherein the signal processing module (58) is applied to calculate a state *(st)* for each image frame of the plurality of body points (32) of the occupant (3), each body point (32) being defined by its position in an x-direction (X), a y-direction (Y), and a z-direction (Z) and its corresponding speed ($\dot{x}$) in the x-direction (X), ($\dot{y}$) in the y-direction (Y) and ($\dot{z}$) in the z-direction (Z).

**Patentansprüche**

1. Ein Verfahren zum Bestimmen von Positionen eines Insassen (3) in einem Fahrzeug (1), um einen Rückhalteeinsatz des Fahrzeugs (1) anzupassen, das Verfahren umfassend:

  Bereitstellen mindestens eines 3D-Sensorsystems (21) zum Erfassen einer Vielzahl von zeitverzögerten Bildern des mindestens einen Insassen (3) im Fahrzeug (1);
  Bestimmen einer 3D-Position für jeden aus einer Vielzahl von Körperpunkten (32) des Insassen (21) aus Rohbilddaten (23) pro aufgenommenem Bild;
  Übertragen der 3D-Positionen der Vielzahl von Körperpunkten (32) an einen Kalman-Filter (40), um eine gefilterte oder vorhergesagte Kopfposition (33F), eine gefilterte oder vorhergesagte rechte Schulterposition (34F), eine gefilterte oder vorhergesagte linke Schulterposition (35F) und eine gefilterte oder vorhergesagte mittlere Wirbelsäulenposition (37F) aus der Vielzahl von Körperpunkten (32) zu bestimmen;

Eingeben der gefilterten oder vorhergesagten Kopfposition (33F), der gefilterten oder vorhergesagten rechten Schulterposition (34F), der gefilterten oder vorhergesagten linken Schulterposition (35F) und der gefilterten oder vorhergesagten mittleren Wirbelsäulenposition (37F) in einen Berechnungsabschnitt (50), der eine aktuelle 3D-Kopfposition (33) und eine aktuelle 3D-Brustposition (36) berechnet; und

Verwenden der aktuellen 3D-Kopfposition (33) und der aktuellen 3D-Brustposition (36) als eine Eingabe für die Bestimmung der Position des Insassen (3) im Fahrzeug (1) und eine Anpassung des Rückhalteeinsatzes des Fahrzeugs (1).

2. Das Verfahren nach Anspruch 1, wobei ein Signalverarbeitungsmodul (58) verwendet wird, um einen Zustand *(st)* für jedes Bild der Vielzahl von Körperpunkten (32) des Insassen (3) zu berechnen, wobei jeder Körperpunkt (32) durch seine Position in einer x-Richtung (X), einer y-Richtung (Y) und einer z-Richtung (Z) und seine entsprechende Geschwindigkeit $(\dot{x})$ in der x-Richtung (X), $(\dot{y})$ in der y-Richtung (Y) und $(\dot{z})$ in der z-Richtung (Z) definiert ist.

3. Das Verfahren nach einem der vorhergehenden Ansprüche, wobei der Kalman-Filter (40) die folgenden Schritte umfasst:

   • Vorhersagen (41) eines -Zustandes (**st**) von einer 3D-Position für jeden einer Vielzahl von Körperpunkten (32) des Insassen (3) unter Verwendung der vorherigen 3D-Position für jeden einer Vielzahl von Körperpunkten (32) des Insassen und einer Fehlerschätzung;
   • Korrigieren (42) durch Vergleichen der vorhergesagten Position für jeden aus einer Vielzahl von Körperpunkten (32) des Insassen (3) mit der gemessenen 3D-Position für jeden aus einer Vielzahl von Körperpunkten (32) des Insassen (3); und
   • Aktualisieren (43) der 3D-Position für jeden einer Vielzahl von Körperpunkten (32) des Insassen (3) für ein Bild mit der gemessenen 3D-Position einer Vielzahl von Körperpunkten (32) des Insassen (3).

4. Das Verfahren nach Anspruch 3, wobei die Vorhersage (41) den Zustand *(st)* gemäß dem Systemmodell für die nächste Iteration vorhersagt.

5. Das Verfahren nach Anspruch 3, wobei vor dem Korrigieren (42) ein Eignungstest durchgeführt wird, um festzustellen, ob die gemessene 3D-Position und das Modell gültig sind oder nicht, wobei der Eignungstest auf dem Mahalanobis-Abstand basiert:

$$Inno^{T} \times S^{-1} \times Inno \leq Schwellenwert.$$

6. Das Verfahren nach Anspruch 5, wobei *Inno = z - ẑ* ein Messfehler zwischen den Rohbilddaten (23) und den vorhergesagten 3D-Positionen der Körperpunkte (32) ist.

7. Das Verfahren nach Anspruch 5, wobei der Eignungstest den Mahalanobis-Abstand mit einer Schätzung der Messqualität kombiniert.

8. Das Verfahren nach Anspruch 1, wobei eine Kohärenzprüfung (45) an der gefilterten Kopfposition (33F), der gefilterten rechten Schulterposition (34F), der gefilterten linken Schulterposition (35F) und der gefilterten mittleren Wirbelsäulenposition (37F) durchgeführt wird, um die 3D-Kopfposition (33) zu bestimmen.

9. Das Verfahren nach Anspruch 8, wobei ein Ergebnis der Kohärenzprüfung (45) an eine Punktkombination (46) gesendet wird, um die 3D-Brustposition (36) zu bestimmen.

10. Ein nicht-transitorisches computerlesbares Medium, das Programmanweisungen speichert, die auf einer elektronischen Steuereinheit (10) des Systems nach Anspruch 11 ausführbar sind, um ein computerimplementiertes Verfahren nach Anspruch 1 zur Bestimmung einer 3D-Kopfposition (33) und einer 3D-Brustposition (36) eines Insassen (3) in einem Fahrzeug gemäß einem der vorhergehenden Ansprüche durchzuführen.

11. Ein System zur Bestimmung von Positionen eines Insassen (3) bei einer Rückhalteeinsatz-Entfaltungsadaption in einem Fahrzeug (1), umfassend:
    eine elektronische Steuereinheit (10) des Fahrzeugs (1);

    ein Fusionsmodul (51), ein Ereignisdetektionsmodul (52), ein Insassenverschiebungs-Vorhersagemodul (53) und ein Entfaltungs-Anforderungsmodul (54), die Teil der elektronischen Steuereinheit (10) sind;

mindestens ein 3D-Sensorsystem (21), das geeignet ist, eine Vielzahl von zeitverzögerten Bildern des mindestens einen Insassen (3) in dem Fahrzeug (1) zu erfassen, wobei das mindestens eine 3D-Sensorsystem (21) mit einem Signalerfassungs- und -verarbeitungsmodul (58) eines Crash-Algorithmus (59) verbunden ist;

**gekennzeichnet durch**

einen Kalman-Filter (40) in dem Signalverarbeitungsmodul (58), das eine gefilterte Kopfposition (33F), eine gefilterte rechte Schulterposition (34F), eine gefilterte linke Schulterposition (35F) und eine gefilterte mittlere Wirbelsäulenposition (37F) aus einer Vielzahl von Körperpunkten (32) bestimmt, die von dem mindestens einen 3D-Sensorsystem (21) erfasst wurden; und

einen Berechnungsabschnitt (50), der eine aktuelle 3D-Kopfposition (33) und eine aktuelle 3D-Brustposition (36) aus der gefilterten Kopfposition (33F), der gefilterten rechten Schulterposition (34F), der gefilterten linken Schulterposition (35F) und der gefilterten mittleren Wirbelsäulenposition (37F) zur Verwendung in dem Crash-Algorithmus (59) berechnet.

12. Das System nach Anspruch 11, wobei das Signalverarbeitungsmodul (58) angewendet wird, um einen Zustand (*st*) für jedes Bild der Vielzahl von Körperpunkten (32) des Insassen (3) zu berechnen, wobei jeder Körperpunkt (32) durch seine Position in einer x-Richtung (X), einer y-Richtung (Y) und einer z-Richtung (Z) und seine entsprechende Geschwindigkeit ($\dot{x}$) in der x-Richtung (X), ($\dot{y}$) in der y-Richtung (Y) und ($\dot{z}$) in der z-Richtung (Z) definiert ist.

**Revendications**

1. Un procédé pour déterminer des positions d'un occupant (3) dans un véhicule (1) afin d'adapter un déploiement d'un dispositif de retenue du véhicule (1), le procédé comprenant :

fournir au moins un système de capteurs 3D (21) pour capturer une pluralité d'images retardées de l'au moins un occupant (3) dans le véhicule (1) ;

déterminer une position 3D pour chacun d'une pluralité de points corporels (32) de l'occupant (21) à partir de données d'image brutes (23) par image capturée ;

transmettre les positions 3D de la pluralité de points corporels (32) à un filtre de Kalman (40) afin de déterminer une position de tête (33F) filtrée ou prédite, une position d'épaule droite (34F) filtrée ou prédite, une position d'épaule gauche (35F) filtrée ou prédite et une position de colonne vertébrale centrale (37F) filtrée ou prédite à partir de la pluralité de points corporels (32) ;

entrer la position de tête filtrée ou prédite (33F), la position d'épaule droite filtrée ou prédite (34F), la position d'épaule gauche filtrée ou prédite (35F) et la position de colonne vertébrale centrale filtrée ou prédite (37F) dans une section de calcul de position (50) qui calcule une position de tête 3D actuelle (33) et une position de thorax 3D actuelle (36) ; et

utiliser la position 3D actuelle de la tête (33) et la position 3D actuelle du thorax (36) comme entrée pour déterminer la position de l'occupant (3) dans le véhicule (1) et une adaptation du déploiement du dispositif de retenue du véhicule (1).

2. Le procédé selon la revendication 1, dans lequel un module de traitement de signal (58) est appliqué pour calculer un état (*st*) pour chaque image de la pluralité de points corporels (32) de l'occupant (3), chaque point corporel (32) étant défini par sa position dans une direction x (X), une direction y (Y) et une direction z (Z) et sa vitesse correspondante ($\dot{x}$) dans la direction x (X), ($\dot{y}$) dans la direction y (Y) et ($\dot{z}$) dans la direction z (Z).

3. Le procédé selon l'une quelconque des revendications précédentes, dans lequel le filtre de Kalman (40) comprend les étapes consistant à :

• prédire (41) un état (*st*) d'une position 3D pour chacun d'une pluralité de points corporels (32) de l'occupant (3) en prenant la position 3D précédente pour chacun d'une pluralité de points corporels (32) de l'occupant et une estimation d'erreur ;

• corriger (42) en comparant la position prédite pour chacun d'une pluralité de points corporels (32) de l'occupant (3) avec la position 3D mesurée pour chacun d'une pluralité de points corporels (32) de l'occupant (3) ; et

• actualiser (43) la position 3D de chacun d'une pluralité de points corporels (32) de l'occupant (3) pour une image avec la position 3D mesurée d'une pluralité de points corporels (32) de l'occupant (3).

4. Le procédé selon la revendication 3, dans lequel la prédiction (41) prédit l'état *(st)* selon le modèle du système pour l'itération suivante.

5. Le procédé selon la revendication 3, dans lequel, avant la correction (42), un test d'éligibilité est effectué pour déterminer si la position 3D mesurée et le modèle sont valides, le test d'éligibilité étant basé sur la distance de Mahalanobis :

$$Inno^T \times S^{-1} \times Inno \leq seuil.$$

6. Le procédé selon la revendication 5, dans lequel *Inno* = *z* - *ẑ* est une erreur de mesure entre les données d'image brutes (23) et les positions 3D prédites des points du corps (32).

7. Le procédé selon la revendication 5, dans lequel le test d'éligibilité combine la distance de Mahalanobis avec une estimation de la qualité de la mesure.

8. Le procédé selon la revendication 1, dans lequel un contrôle de cohérence (45) est effectué sur la position filtrée de la tête (33F), la position filtrée de l'épaule droite (34F), la position filtrée de l'épaule gauche (35F) et la position filtrée de la colonne vertébrale centrale (37F) afin de déterminer la position 3D de la tête (33).

9. Le procédé selon la revendication 8, dans lequel un résultat du contrôle de cohérence (45) est envoyé à une combinaison de points (46) afin de déterminer la position 3D du thorax (36).

10. Un support informatique non transitoire stockant des instructions de programme exécutables sur une unité de contrôle électronique (10) du système selon la revendication 11 afin de exécuter un procédé mis en œuvre par ordinateur selon la revendication 1 pour déterminer une position 3D de la tête (33) et une position 3D du thorax (36) d'un occupant (3) dans un véhicule selon l'une des revendications précédentes.

11. Un système pour déterminer des positions d'un occupant (3) utilisé dans une adaptation du déploiement d'un dispositif de retenue dans un véhicule (1), comprenant :
une unité de contrôle électronique (10) du véhicule (1) ;

    un module de fusion (51), un module de détection d'événements (52), un module de prédiction de déplacement d'occupant (53) et un module de demandes de déploiement (54) faisant partie du système de unité de contrôle électronique (10) ;
    au moins un système de capteurs 3D (21) adapté pour capturer une pluralité d'images temporellement décalées de l'au moins un occupant (3) dans le véhicule (1), le au moins un système de capteurs 3D (21) étant connecté à un module d'acquisition et de traitement de signaux (58) d'un algorithme de collision (59) ;
    **caractérisé par**
    un filtre de Kalman (40) dans le module de traitement de signaux (58) qui détermine une position filtrée de la tête (33F), une position filtrée de l'épaule droite (34F), une position filtrée de l'épaule gauche (35F) et une position filtrée de la colonne vertébrale centrale (37F) à partir d'une pluralité de points du corps (32) capturés par le au moins un système de capteurs 3D (21) ; et
    une section de calcul (50) qui calcule une position 3D actuelle de la tête (33) et une position 3D actuelle du thorax (36) à partir de la position filtrée de la tête (33F), de la position filtrée de l'épaule droite (34F), de la position filtrée de l'épaule gauche (35F) et de la position filtrée de la colonne vertébrale centrale (37F) pour utilisation dans l'algorithme de collision (59).

12. Le système selon la revendication 11, dans lequel le module de traitement de signal (58) est utilisé pour calculer un état *(st)* pour chaque image de la pluralité de points corporels (32) de l'occupant (3), chaque point du corps (32) étant défini par sa position dans une direction x (X), une direction y (Y) et une direction z (Z) et sa vitesse correspondante (*ẋ*) dans la direction x (X), (*ẏ*) dans la direction y (Y) et (*ż*) dans la direction z (Z).

**Fig. 1**

**Fig. 2**

**Fig. 3A**

**Fig. 3B**

**Fig. 3C**

Fig. 4

**Fig. 5**

Updating the error between the 3D position for each of a plurality of body points of the occupant for one frame and the predicted position each of a plurality of body points of the occupant.

40

43

45

Correcting by comparing the predicted position for each of a plurality of body points of the occupant and the determined 3D position for each of a plurality of body points of the occupant

42

50

Predicting an estimation of a 3D position for each of a plurality of body points of the occupant by taking the previous 3D position for each of a plurality of body points of the occupant an error estimation.

41

**Fig. 6**

Crash Algorithm

**58**

3D sensor system
Occupant Size

Seat track sensor,
Back rest sensor,
Weight Sensor

3D sensor system
3D Chest Position

3D sensor system
3D Head Position

Central impact
sensors

Remote impact
sensors

21

12, 13, 14

21

21

4C

4R

**59**

FUSION — 51

60

53

Occupant Displacement
prediction

Adapt deployment times of
airbags and adaptive
airbags

52

Event detection

Deployment/
No Deployment
decision

54

Deployment
requests

Adjust restraint system
strategy in function of
occupant
classification

62

**Fig. 7**

EP 4 420 937 B1

**EP 4 420 937 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003209893 A
- US 20040153229 A1
- US 5653462 A
- US 5531472 A